Europäisches Patentamt

European Patent Office

Office européen des brevets

(19)

(11) Publication number: **0 157 977**
A2

# (12) EUROPEAN PATENT APPLICATION

(21) Application number: **84305773.8**

(22) Date of filing: **23.08.84**

(51) Int. Cl.⁴: **A 24 B 3/18**
**A 24 B 7/00, A 24 B 5/00**

(30) Priority: 30.08.83 GB 8323206
30.08.83 GB 8323207
30.08.83 GB 8323208

(43) Date of publication of application:
16.10.85 Bulletin 85/42

(84) Designated Contracting States:
DE GB IT

(71) Applicant: AMF INCORPORATED
World Headquarters 777 Westchester Avenue
White Plains New York 10604(US)

(72) Inventor: Nickols, Francis Malcolm John
31 Strathfield Road
Andover Hampshire(GB)

(74) Representative: Matthews, Howard Nicholas et al,
MATTHEWS HADDAN & CO Haddan House 33 Elmfield
Road
Bromley Kent BR1 1SU(GB)

(54) Apparatus for the evaluation of particulate material.

(57) An apparatus and process for evaluating particulate material in elongate form. The apparatus comprises feeder means (1) for receiving a sample removed from a mass of the material and for feeding the material to an outlet at a substantially constant rate of flow; a classifier (3) for receiving said material from the outlet of said feeder, said classifier having a first sieve tray (21) having holes which retain a first fraction having lengths exceeding 5 mm and pass a second fraction of lengths between 1 - 5 mm; a second sieve tray (22) having holes which pass a second fraction of particles of 1 mm in length or less and retaining particles greater than 1 mm in length or less and retaining particles greater than 1 mm in length up to about 5 mm in length; a third tray (23) which is imperforate for receiving the second fraction; a series of bins (6a - 6c) located in relation to the outlet ends of the trays to receive the three fractions; controllable drive means (64, 65) for said bins for independant tipping thereof of discharge the material at a desired rate; a vibratory optical viewing table (95); sampling means in the form of a receptacle (75) which is capable of reciprocating at least into and out of the region beneath the bin containing the second fraction, and of tipping the contents of the receptacle onto said optical viewing table; electro-optical scanning meanss (10) for scanning the sample on substantial separation after a predetermined vibration period; and microprocessor to process the electrical signals from said scanning means to obtain values representing at least length and width of strand.

./...

FIG.1

TITLE: <u>APPARATUS FOR THE EVALUATION OF PARTICULATE</u>
<u>MATERIAL</u>.

This invention relates to apparatus for the
evaluation of particulate material e.g., cut tobacco,
in relation to its particle geometry.   The particle
geometry of cut tobacco is related to the filling and
capacity and firmness of cut tobacco and accordingly it
is customary to assess the geometry and to adjust the
associated tobacco machinery accordingly.   However
such assessment by optical measurement as at present
carried out takes days to obtain results.   By filling
capacity we mean specific volume in cc/gm and firmness
is the pressure per volumetric strain.

In order to carry out an analysis of cut tobacco a
sample of the tobacco is first sieved.   However,
inaccuracies arise since longer strands of tobacco tend
to work their way through the sieve holes resulting in
an unrepresentative sieved sample.   The longer strands
become entangled with each other and for the purpose of
analysis on an optical table have to be carefully
pulled apart prior to mea surement.   Another problem
arises when considering mechanisation of image analysis
is that the dust particles, which although only a small
'fraction by weight, are very numerous which means that
measurement by scanning and computing techniques takes
too long for practical use where rapid feedback of information is required so that parameters such as thickness of cut can be adjusted to obtain the optimum filling power.

An object of the present invention is to provide apparatus for image analysis whereby rapid determination of particle geometry and especially for use with cut tobacco although applicable to other particulate material.

According to the invention there is provided a process for the evaluation of particulate material of elongate form, comprising -

a) removing a sample of the material from a mass thereof;

b) delivering said sample at a substantially constant rate of flow to a classifier;

c) effecting classification in said classifier to produce:

    i) a first fraction having long strands substantially exceeding 5 mm;

    ii) a second fraction consisting substantially of 1 - 5 mm strand lengths; and

    iii) a third fraction consisting substantially of particles less than 1 mm in length;

d) effecting sampling of the second fraction to obtain a representative sample thereof;

e) delivering the sample of the second fraction to an optical inspection table;

f)   vibrating said table to effect substantial separation of the strands of said sample;

g)   scanning the strands of the separated sample by means of an electro-optical scanning head;   and

h)   processing the signals from said scanning head by means of a micro-processor to obtain values representing at least length and width of strand.

To achieve successful separation of the strands during the vibration stage on the optical table the length of the strands in the second fraction is matched to the limit of fluidity.   In other words the inventor has observed that separation of the strands is possible if the optimum value of strand length can be obtained at which the tobacco becomes fluid in the same way as the tobacco becomes fluidic at the zone in the cigarette maker when the tobacco is poured in a continuous stream into a channel prior to being wrapped in paper to form a continuous rod.

In this process at least three fractions are obtained.   The first fraction comprises very long tangled strands which will not pass the top sieve. They are longer than 5 mm and up to 20 mm and thus longer than needed for cigarette making.   They are not analysed because they will be broken into smaller particles prior to cigarette making and so are only weighed as a fraction.

The second fraction is the medium and short strands, which pass the first sieve having preferably 5 mm diameter holes and are easily separable. They are generally from 1 to 5 mm long, although some slightly longer strands can find their way through the holes, and comprise the fraction which one is concerned to improve in length by process improvements in order to enhance filling power. This second fraction which is the most fluidic is weighed and optically analysed.

The third fraction is the fines or dust, below 1 mm in length, which decrease filling power and only needs to be weighed.

An important aspect to be borne in mind in relation to cut tobacco is the inability to achieve sharp threshold values from sieving operations. Due to the characteristic of the cut tobacco some longer strands may become entangled and pass through a particular sieve size while smaller particles may be supported by larger particles and therefore not pass the sieve. A sieve with 5 mm holes is preferred but this may be increased or decreased to achieve a fraction in which optimum fluidity is obtained.

The invention will now be described by way of example with reference to the accompanying diagrammatic drawings wherein:-

FIGURE 1 is a schematic diagram of a system made in accordance with the invention;

FIGURE 2 is a perspective view of a tobacco feeding device for use with the invention;

FIGURE 3 and 3A are views of a weighing and dispensing system for use with the invention;

FIGURE 4 is a perspective view of a sampling device;

FIGURE 5 is a perspective view of an inspection table; and

FIGURE 6 is another view of the inspection table with associated camera device.

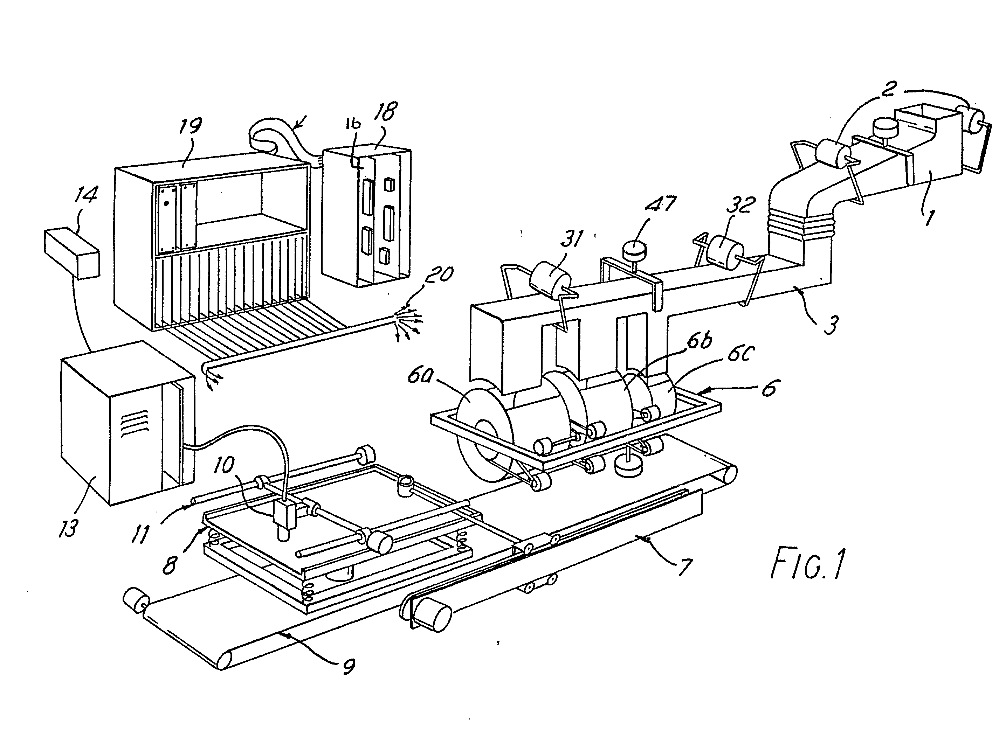

Referring first to Figure 1, a quantity of cut tobacco is first entered into a vibratory tobacco feeder 1, driven by stepping motors 2, which feeder automatically meters the tobacco in a controlled manner into a sieving section 3. It is necessary to control the tobacco feed rate or the amount of tobacco into the sieving section so as to give efficient sieving and to avoid choking the sieving section 3.

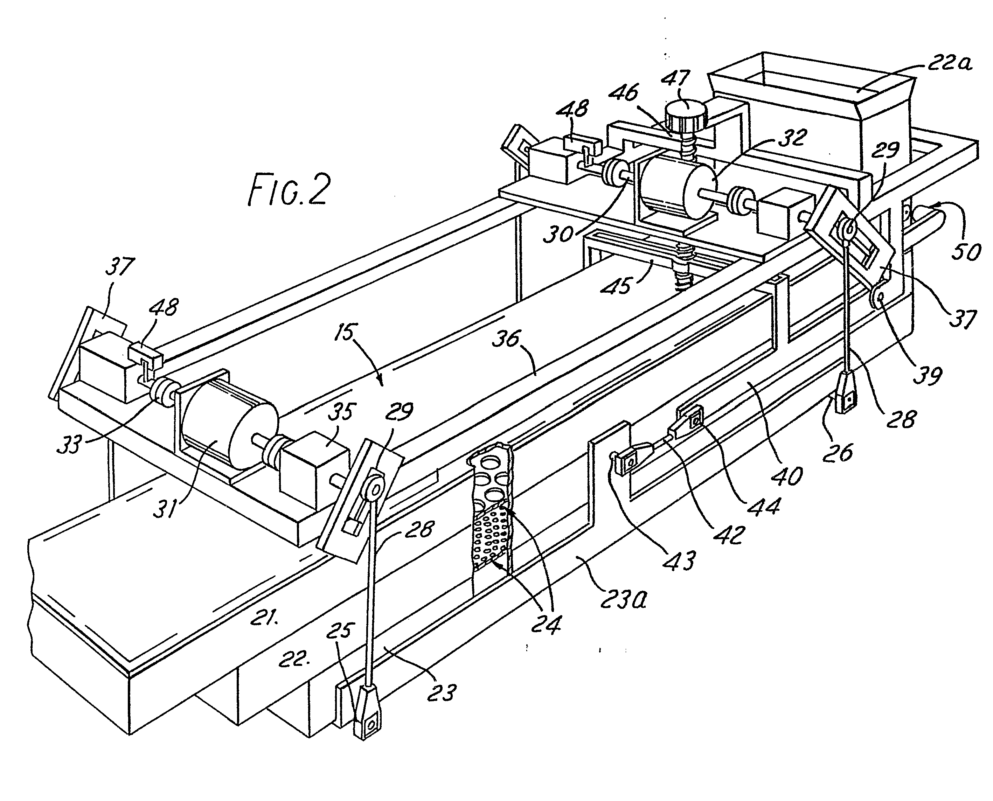

The sieving section 3, consists of two sieve layers depending on the degree of size classification required. The upper sieve, separates long strands of tobacco, and the lower sieve separates intermediate size strands. Fine particles of tobacco fall onto a tray 4. The sieves vibrate for a length of time to allow the tobacco to be efficiently classified. The sieving section will be further described in relation to Figure 2.

The classified tobacco fractions lying on the sieve are transferred to the bins of weighers 6a,6b and 6c in the weighing area 6. As a result the mass of tobacco in each fraction is computed by subtraction as each bin is emptied.

A representative sample of tobacco is now taken from the intermediate size fraction following the weigher 6b by means of a sampling device 7 to be described later, and deposited on an optical inspection surface 8. The remaining tobacco is transferred out of the machine by a conveyor system 9.

The sample of tobacco is now spread on the table 8 by vibrating the table. The table 8 provides an optical surface on which optical inspection can be carried out.

An optical scanning head 10, located on a support 11 over the surface 8 measures light reflectance from, or light transmittance through the tobacco strands and provides optical data to an electronic vision system 13 e.g., Intel Corporation California, USA, model 8086 interfaced with a frame freeze facility 14 e.g., from Imaging Technology Inc. California, USA. The optical scanning head 10 may be a line scan or array camera, e.g., a charge coupled device (CCD) line scan or image array. The head could instead be a raster scan electron beam grey scale or colour camera which need not necessarily sense wavelengths of light that are sensed by the human retina.

The vision system 13 analyses the geometry (i.e., length, width, curvature) and/or the colour of the tobacco strands and presents the conclusions on a display 14.

The geometry and/or colour is analysed by sampling the intensity and wavelength of light at predetermined pixel areas or points. These data are provided by the optical scanner and stored in corresponding electronic memory locations and subsequently processed using electronic logic. Electronic logic is defined as software, digital logic and analogue electronics.

The following characteristics of the tobacco strands will be evaluated by the vision and processing system:-

a. strand length

b. strand width

c. curvature

d. area of each strand

e. perimeter length of each strand

f. discontinuities

g. estimate of filling power (specific volume)

h. simulation of sieving e.g., minimum size circle, square or rectangle to enclose one integral strand

i. estimation of firmness (ie., bulk modulus of elasticity defined as $\Delta p / \Delta v / v$ where $\Delta p$ is change in pressure which produces change in volume $\Delta v$ from original volume V.

8 -

The vision system may be calibrated by either measuring the size of a predetermined reference image in the field of view or by adjusting the image magnification such as to allow the predetermined image to encompass certain number of pixels. The conclusions are also used to control the behaviour of associated tobacco machinery, so as to achieve predetermined objectives such as strand cut width. The tobacco cutter would produce the set point cut width using the vision system as a measurement device.

The sample is now removed from the optical surface to allow the analysis of a fresh sample.

A microcomputer 18, controls the actions of all the components including the stepping motors, electromagnetic vibrators, load cell, amplitude sensor and position switches in the apparatus by way of a digital input/output card 16, a power drive rack 19 and wiring loom 20 and also analyses the weight measurements of the classified tobacco. The conclusions drawn from the weight and geometry measurements are presented on the t.v. monitor 14 and may also be used to control the behaviour of associated tobacco machinery.

The sieving section 3 is shown in Figure 2 and comprises an entry opening 22a leading to three stacked trays 21, 22, 23 of which the top and middle trays are sieves. Sieve layers are shown at 24. A

0157977

transparent top 15 reduces tobacco and moisture loss.

The bottom tray 23 is supported on a carriage 23a suspended adjacent to its opposite ends on transverse rods 25, 26 that are mounted on the lower ends of four upright suspension bars 28. The upper ends of these bars are connected to variable radius bearings 29 carried by transverse spindles 30 driven by stepping motors 31, 32 through flexible couplers 33. The spindles 30 are mounted in blocks 35 on a frame 36 which is supported by suitable supports (not shown). Each of the spindles also carries two variable radius counter masses 37.

Two levers 40, 41 are pivoted to the frame 36 at 39 and are connected by connecting rods 42 to pivots 43 which are mounted on the tray at the centre of gravity of the tray and bin. The levers 40 are connected together by a bridge 45 which is vertically adjustable by screw 46 operated by a stepping motor 47.

Each spindle 30 has a Hall effect switch 48 associated with it to give a reference point for the step motor 31, 32.

A light sensor 50 serves to give a constant tobacco carpet height on to the top sieve layer.

By adjusting the levers 40 by means of the motor 47 the angle between the levers and the connecting rods 42 can be adjusted so that the pivotal connection 44 can be above or below the line between 43 and 39 and according to this adjustment the tray will be given a jerking motion to throw the tobacco forwards or backwards at controllable speed.

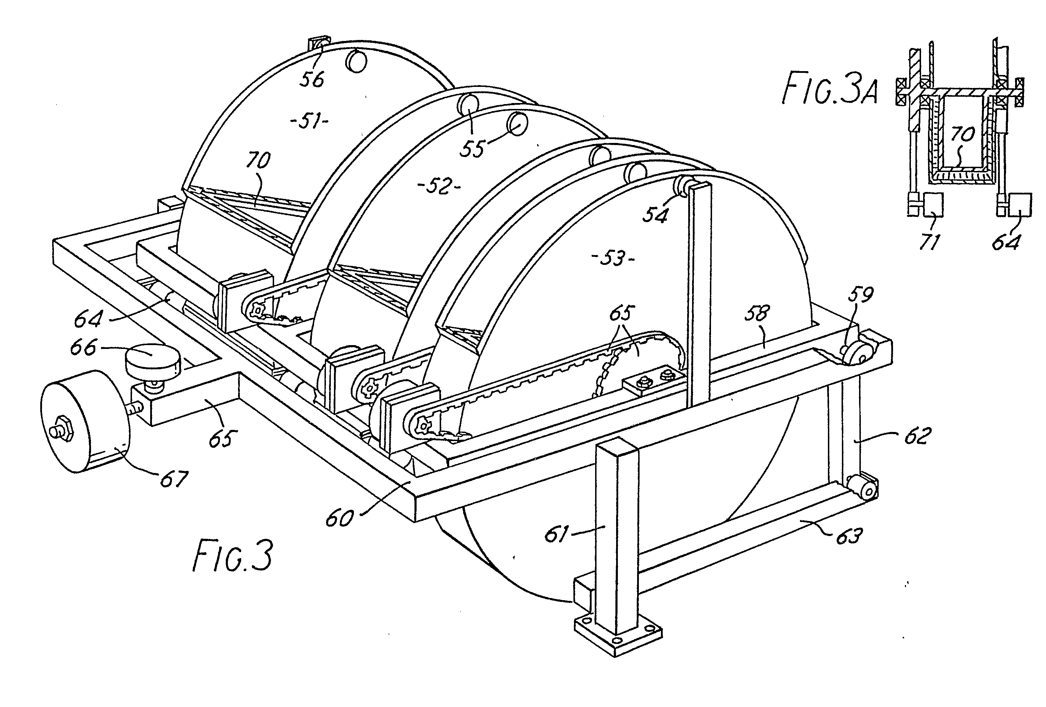

The tobacco fed out of the trays 21, 22, 23 fall respectively into bins or hoppers 51, 52, 53 (Figure 3), (shown as 6a, 6b and 6c in Figure 1).

An optical switch 54, windows 55, and reflector 56 serve to indicate when the bins are full.

The bins are pivotally mounted on an inner frame 58 which is pivoted at 59 to an outer frame 60. The frame 60 ids pivotally mounted at the upper ends of columns 61 and is connected by links 62, 63 to pivots at the lower ends of the columns. The bins are drivable independantly about their pivots by stepping motors 64 through a toothed belt on drive 65.

The frame 60 has a projecting arm 65 which carries a load cell 66 which measures the weight of tobacco in the bins and an adjustable spring 67 to offset the weight of the bins and links.

Within the bins are wiper blades 70 driven by a step motor 71.

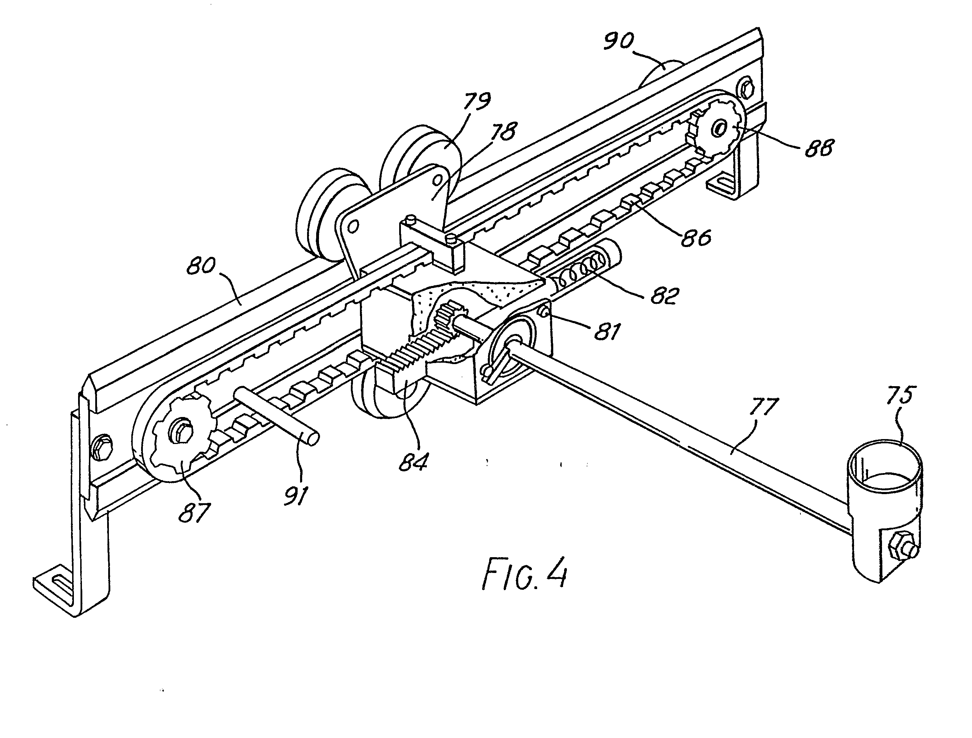

A sampling cup 75 (Figure 4) can be reciprocated horizontally below the outlet of the central bin 52 so as to collect a tobacco sample as the bin is rotated to tip out a stream of tobacco. By suitable timing of the reciprocation of the cup into and out of the falling stream a representative sample is obtained.

Preferably the entire contents are tipped out and the reciprocation matched to the flow so that the cup fills just as the bin empties.    In this way the sample is representative of the entire contents of the bin. Alternatively, a series of samples may be taken on progressive tipping of the bin and successively analysed.    The software controlling the sampling and tipping may be written in such a manner that after analysis of say a succession of two or three samples being found to fall within set parameters no further sampling of the batch within the bin takes place, the bin simply emptying the conveyor 9.

The cup is mounted on one end of a rod 77 which can be rotated about its axis so as to present the cup 75 in an upright tobacco receiving position and can be rotated to invert the cup in order to empty the tobacco from it.    The rod is mounted in a carriage 78 which is slidably mounted by wheels 79 on guideways 80.    The rotary movements of the rod are limited by stops 81. The rod carries a pinion 83 in gear with a rack 84 slidably mounted in the carriage 78, and attached to a spindle 85 which is urged by a spring 82 on the direction which keeps the cup 75 upright.    The carriage is mounted on a toothed belt 86 which is engaged by pinions 87, 88 the latter being drivable by a stepping motor 90.    Projecting between the runs of the belt from the guideways is a stop pin 91.    When the carriage is driven towards the left (Figure 4) the carriage comes into engagement with the stop pin 91 and further movement causes the rack 84 to slide against the action of the spring 82 thereby rotating the pinion 83 and rod 77 to invert the cup 75.

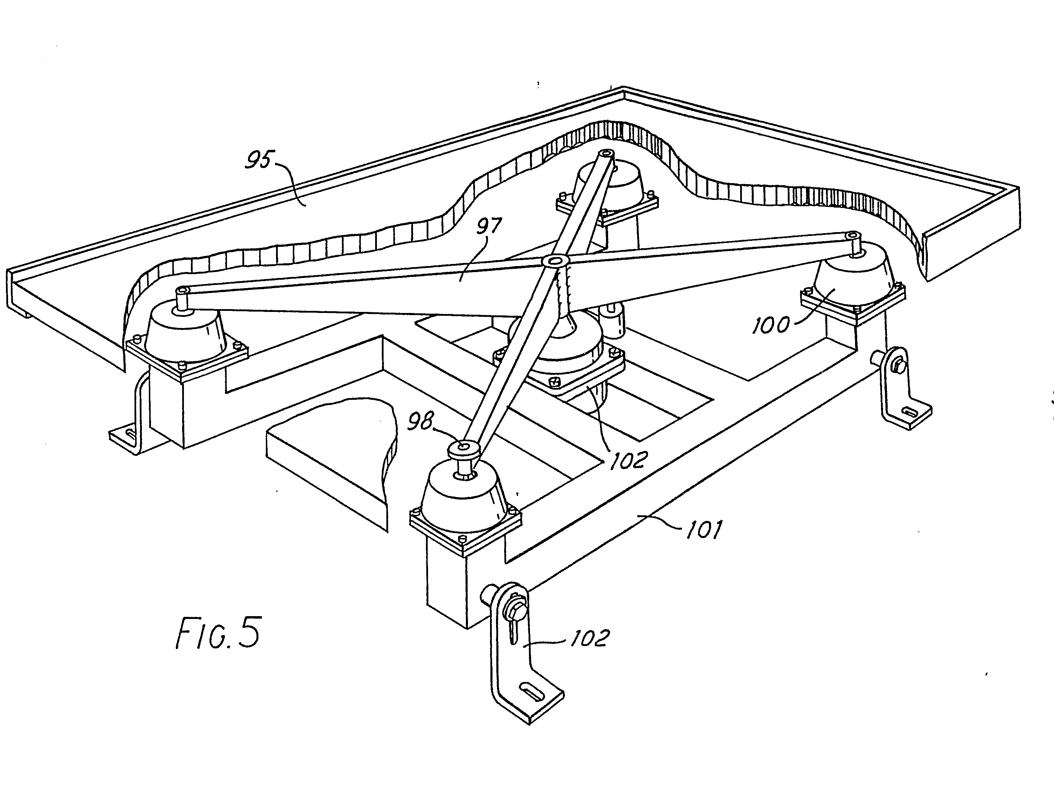

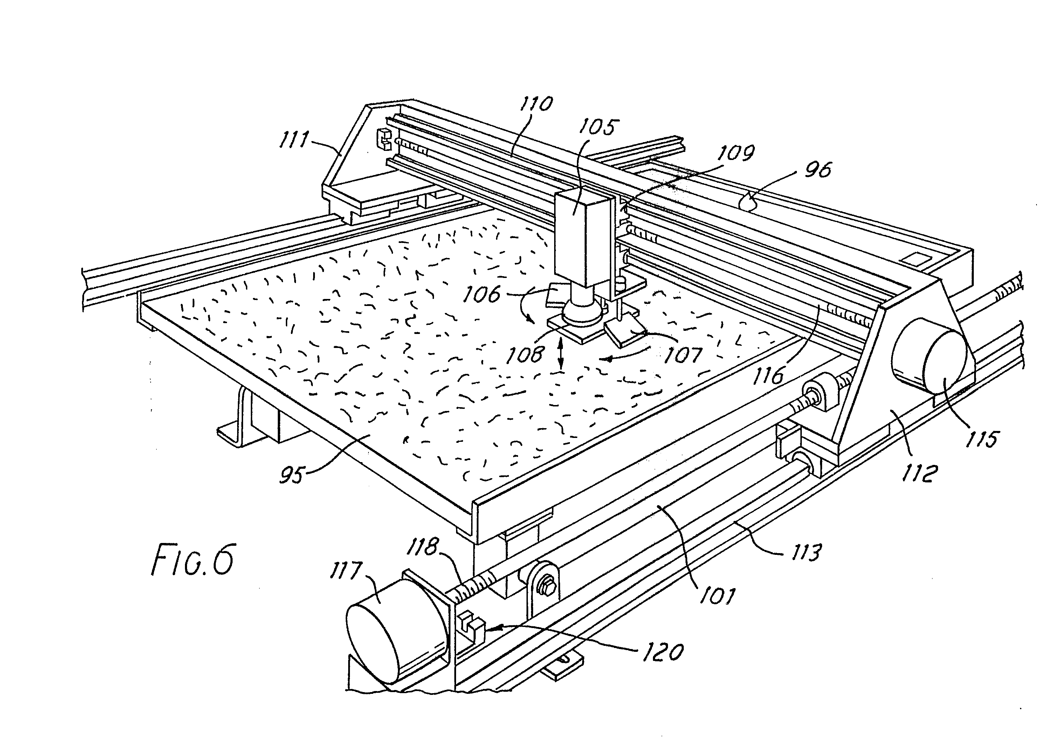

The cup 75 empties the tobacco on to a vibrating table 95, Figures 5 and 6 (shown at 6 in Figure 1) at a position indicated at 96 (Figure 6). The table is attached to a cruciform frame 97 at four positions 98 and the arms of the frame are seated on four vibration mounting springs 100 respectively. These springs are fixed to a sub-frame 101 which is fixed to a suitable foundation by brackets 102.

The centre of the frame 97 is mounted on an electromagnetic vibrator 102 which provides a vertical force moving function. An inductive linear displacement sensor 103 detects the amplitude of vibration. The table is horizontal and vibration causes the tobacco to spread out over the table. On completion of the optical inspection the table is cleared of tobacco by a wiper blade attached to the camera x-y carriage.

The camera 105 for the inspection of the tobacco is provided with focus and servo-zoom device. Associated with the camera are a red filter 106, a green filter 107, and a transparent plate 108 which can be moved vertically and serves to flatten a small area of

0157977

tobacco on to the table while it is under observation which permits good focus and forces the tobacco into a plane for accurate strand measurement. The camera is mounted on a gantry 104 supporting a carriage 109 that is slidable on guideways 110 transversely of the table. The guideways 110 are mounted on plates 111, 112 slidable on rails 113. The carriage 109 is movable transversely by a stepping motor 115 and screw 116 and the gantry is movable longitudinally by a stepping motor 117 and screw 118. By operation of the motors 115, 117 the camera can be caused to scan over a required area of the table.

Four Hall effect vane switches such as 120 are provided at the extremities of the carriages.

CLAIMS:

1. A process for the evaluation of particulate material of elongate form, comprising -

a) removing a sample of the material from a mass thereof;

b) delivering said sample at a substantially constant rate of flow to a classifier;

c) effecting classification in said classifier to produce

(i) a first fraction having long strands substantially exceeding 5 mm;

(ii) a second fraction consisting substantially of 1 - 5 mm strand lengths; and

(iii) a third fraction consisting substantially of particles less than 1 mm in length.

d) effecting sampling of the second fraction to obtain a representative sample thereof;

e) delivering the sample of the second fraction to an optical inspection table;

f) vibrating said table to effect substantial separation of the strands of sample sample;

g) scanning the strands of the separated sample by means of an electro-optical scanning head; and

h) processing the signals from said scanning head by means of a micro-processor to obtain values representing at least length and width of strand and to estimate geometrical filling power (GFP) of the strands based on geometrical features. GFP is defined as the en-masse volume volume of tobacco substance

2. A process as claimed in Claim 1, wherein sampling of the second fraction is carried out by reciprocating a receptacle into and out of a falling stream of the second fraction.

3. A process as claimed in Claim 2, wherein sampling is carried out by reciprocating the receptacle into and out of the stream of the entire second fraction, said reciprocation being controlled so that the receptacle fills just as the last portion of the second fraction falls.

4. An apparatus for evaluating particulate material in elongate form, comprising -

(a) feeder means (1) for receiving a sample removed from a mass of the material and for feeding the material to an outlet at a substantially constant rate of flow;

(b) a classifier (3) for receiving said material from the outlet of said feeder, said classifier having

(i) a first sieve tray (21) having holes which retain a first fraction having lengths exceeding 5 mm [and pass a second fraction of lengths between 1 - 5 mm];

(ii) a second sieve tray (22) having holes which pass a second fraction of particles of 1 mm in length or less and retaining particles greater than 1 mm in length up to about 5 mm in length;

(iii) a third tray (23) which is imperforate for receiving the second fraction;

(c) a series of bins (6a - 6c) located in relation to the outlet ends of the trays to receive the three fractions;

(d) controllable drive means (64, 65) for said bins for independant tipping thereof to discharge the material at a desired rate;

(e) a vibratory optical viewing table (95);

(f) sampling means in the form of a receptacle (75) which is capable of reciprocation at least into and out of the region beneath the bin containing the second fraction, and of tipping the contents of the receptacle onto said optical viewing table;

(g) electro-optical scanning means (10) for scanning the sample on substantial separation after a predetermined vibration period; and

(h) microprocessor to process the electrical signals from said scanning means to obtain values representing at least length and width of strand.

5. Apparatus as claimed in Claim 4, wherein the classifier includes a support device on which the three trays (21, 22, 23) are mounted one above the other, said support device including a frame (36) to be rigid in relation to the floor, rotary drive means (32, 33) on said frame, a carriage (23a) in which the lower tray (23) rests, and suspension rods (28) arranged substantially vertically having their lower ends pivotally connected to the carriage and their upper ends connected to said rotary drive means (37), said. rotary drive means being angularly offset in relation to each other to effect movements of the tray forwards and backwards at an inclination to the horizontal and vertical such as to cause the material to move forwards on the trays.

6. Apparatus as claimed in Claim 5, wherein the support device includes two levers (40, 41) extending horizontally one at each side of the frame (36) and pivotally attached at one end thereto, linkage means (42) connected between the other ends of the levers and pivots (43) which are mounted on the carriage (23a) in the region of the centre of gravity of the trays, a bridge (45) connecting said levers (40, 41) together, and screw adjustment means (46) for adjusting the position of said bridge (45) which in turn adjusts the position of the pivots and hence the effective throw of the rotary drive means.

7. Apparatus as claimed in Claim 6, wherein the rotary drive means comprise variable radius crank arms which are connected to two horizontal rods driven in synchronism by motor means.

8. Apparatus as claimed in any one of Claims 1 to 6, wherein said series of bins comprise three cylinders (6a, 6b, 6c; 51, 52, 53) each having substantially planar end walls and openings in the cylindrical surfaces through which the fractions can enter the bins, said bins being mounted side by side on a common axis.

9. Apparatus as claimed in Claim 7, including a pivotable frame (60) for supporting the bins, said frame being arranged substantially horizontally and having its pivotal axis disposed parallel to the common axis of the bins, and a load cell (66) supported in a fixed position in relation to the floor and supporting in turn said pivotable frame at a position offset from the pivotal axis of the frame.

10. Apparatus as claimed in Claim 7, 8 or 9, including drive motors (64) mounted on said pivotal frame (60), and belt and pulley means (65) for transmitting drive from said motors to said bins.

11. Apparatus as claimed in any one of Claims 1- 10, wherein said vibratory optical viewing table comprises a fixed sub-frame (101), a plurality of flexible mounting points (98) on said sub-frame, a carrier frame (97) mounted on said flexible mounting points, a plate (95) having a planar upper surface for receiving the sample supported on the carrier frame, and an electromagnetic vibrator (102) connected between the -sub-frame and the carrier frame.

12. Apparatus as claimed in Claim 11, including a gantry (104) which supports the scanning means (105), and a transparent plate (108) also carried by said gantry capable of vertical movement between an upper position and a lower portion where the plate presses the separated particles of the sample onto the plate (95).

13. Apparatus as claimed in Claim 12, including rails (113) provided on each side of the plate (95) along which the gantry (104) can travel, a carriage (109) for supporting said scanning means (105) on said gantry, moving said carriage along an axis (x) transversely of the plate, and a second motor (117) for driving said gantry along a longitudinal axix (y)

14. Apparatus as claimed in any one of Claims 1 - 13, including reciprocation means (78 - 90) to reciprocate the receptacle (75) over a short distance into and out of the region beneath the second container.

15. Apparatus as claimed in Claim 14, wherein the reciprocation means drives the receptacle between the sampling zone and a discharge zone over the optical viewing table.

16. Apparatus as claimed in Claim 15, including means for inverting (81 - 84) the receptable to discharge the collected sample.

17. Apparatus as claimed in Claim 16, wherein the receptacle is mounted on a rod (77), the inverting means comprising a pinion (83) on the rod and a toothed rack (84) engaged by said pinion the rod (77) and rack (83) being mounted on a carriage (78) which is connected to a toothed belt (86) supported on pinions (87, 88) one of which is driven, said rack (84) being resiliently mounted by resilient means (82) on the carriage (78) and engageable with a stop (91) whereby when the rack engages the stop it is moved to rotate the pinion on the rod to invert the receptacle, the receptacle being returned by said resilient means when the carriage moves away from the stop.

18. A sampling apparatus as claimed in Claim 17, having upper and lower guide rails (80) parallel to each other engaged by pairs of grooved wheels (79) attached to the carriage above the upper rail and below the lower rail respectively.

19. A sampling apparatus as claimed in Claim 17 or 18, wherein the toothed belt (86) is driven by a stepping motor (90), the carriage (78) being engageable with said stop (91) which provides a positional reference for the carriage and motor.

20. Apparatus as claimed in any one of Claims 1 - 19, wherein all the drive means for the feeding mechanism, classifier scanning means, sampling means and conveyor are controlled by software by way of said microprocessor.

21. Apparatus as claimed in any one of Claims 1 - 20, wherein said optical scanning means comprises a camera having an array by which the relative covered and uncovered areas of the table can be assessed.

FIG.1

*FIG.2*

FIG.3A

FIG.3

FIG. 4

90

79

78

80

88

86

82

81

87

91

84

77

75

4/6

0157977

FIG.5

FIG.6